# DEMANDE DE BREVET EUROPEEN

(11) **EP 1 666 148 A1**
(43) Date de publication de la demande: **07.06.2006**
(21) Numéro de dépôt: 05110143.4
(22) Date de dépôt: 28.10.2005
(51) Int. Cl.: B01L 3/00, B01J 19/00, B01L 1/02

(54) **Réacteur multi-puits appliquant la même pression à tous les récipients**

(30) Priorité: 17.11.2004 FR 0452648
(71) Demandeur: MEMOS SAS, 57200 SARREGUEMINES (FR)
(72) Inventeur: Meyer, Eric, 57410, Petit Rederching (FR)
(74) Mandataire: Vièl, Frédérique

(57) **Abrégé**

L'invention concerne un réacteur multipuits comprenant un socle (1) muni d'au moins deux alvéoles (11) pouvant recevoir chaqune un récipient et d'un couvercle (3) pour fermer le réacteur. Le couvercle (3) du réacteur de l'invention est muni de moyens (35, 6) pour appliquer une pression à l'intérieur du réacteur de sorte que tous les récipients soient soumis à une même pression, et de moyens (31,32,33,34) pour fixer le couvercle (3) au socle (1) du réacteur de sorte qu'il ferme de façon étanche le réacteur lorsqu'une pression est appliquée à l'intérieur du réacteur. Un tel réacteur permet donc de réaliser des séries de réaction en exerçant une pression à l'intérieur du réacteur. Les moyens pour fixer le couvercle (3) sur le socle (1) comprennent de préférence un pivot (31) autour duquel le couvercle (3) peut pivoter, une tige filetée (33) solidaire du socle (1) et s'étendant sur une longueur suffisante pour saillir au-dessus du couvercle (3) lorsque celui-ci est en position fermée et un écrou (34) pouvant être vissé sur la tige filetée (33) en appuyant sur le couvercle (3) en position fermée.

## Description

L'invention concerne un réacteur multipuits comprenant un socle muni d'au moins deux alvéoles pouvant recevoir chacune un récipient et d'un couvercle pour fermer le réacteur.

On connaît déjà des réacteurs multipuits qui permettent de réaliser une série de réactions dans des conditions réactionnelles identiques. Ces réacteurs multipuits comprennent en général un socle qui peut être chauffé ou refroidi et qui comporte une série d'alvéoles destinées à recevoir les récipients dans lesquels doivent se faire les réactions. Ces récipients sont en général des tubes à essai ou des petits flacons. Ce socle est en général surmonté d'un module de reflux. Ce dernier est percé d'autant de trous qu'il y a d'alvéoles dans le socle et il est refroidi par exemple en faisant circuler de l'eau. Les récipients reposent par leur base au fond des alvéoles du socle où ils peuvent être chauffés, tandis que leur partie supérieure est en contact avec le module de reflux. Ainsi, les solvants ou les réactifs volatils qui tendraient à s'évaporer sous l'effet de la chaleur apportée par le socle sont refroidis et condensés au niveau du récipient refroidi. On évite ainsi une perte de solvant ou de réactif.

Pour les réactions nécessitant une atmosphère inerte, il est prévu soit d'équiper chaque récipient d'un bouchon relié à une source de gaz inerte, soit d'équiper l'ensemble du réacteur d'un couvercle recouvrant tous les récipients.

Dans d'autres systèmes, il est connu de placer des connecteurs de vide soit sur chacun des récipients individuellement soit de façon centralisée en plaçant un couvercle spécial sur le réacteur.

De tels réacteurs sont par exemple commercialisés par la société Büchi Labortechnik AG sous la marque Syncore® ou par la société H+P Labortechnik AG sous la marque Variomag® Reaction Block.

Ces réacteurs ne permettent cependant pas de travailler sous pression.

On connaît du document GB 2 270 797 A un réacteur multipuits avec lequel il est possible d'appliquer dans chaque tube à essai une certaine pression. Pour cela, le réacteur est muni d'un couvercle équipé de moyens pour appliquer une pression à l'intérieur de chaque récipient. Dans ce document, chaque récipient est isolé des autres en plaçant un joint soit entre les bords du récipient et le couvercle, soit entre la plaque support et le couvercle entourant chaque récipient. Cette solution ne permet pas d'assurer des conditions réactionnelles identiques pour chaque récipient en les soumettant tous à la même pression.

L'objectif de l'invention est donc de développer un réacteur multipuits selon le préambule qui permette en outre de travailler sous pression en assurant des conditions réactionnelles identiques pour tous les récipients.

Cet objectif est atteint conformément à l'invention par le fait que le couvercle est muni de moyens pour appliquer une pression à l'intérieur du réacteur de sorte que tous les récipients soient soumis à une même pression, et de moyens pour fixer le couvercle au socle du réacteur de sorte qu'il ferme de façon étanche le réacteur lorsqu'une pression est appliquée à l'intérieur du réacteur. Il est ainsi possible d'appliquer à l'intérieur du réacteur une pression identique pour tous les récipients, par exemple d'un gaz réacteur ou d'un gaz inerte.

Les moyens pour fixer le couvercle sur le socle peuvent comprendre un pivot autour duquel le couvercle peut pivoter, une tige filetée solidaire du socle et s'étendant sur une longueur suffisante pour saillir au-dessus du couvercle lorsque celui-ci est en position fermée et un écrou pouvant être vissé sur la tige filetée en appuyant sur le couvercle en position fermée. La tige est fixée sur un pivot solidaire du socle de sorte à pouvoir pivoter entre une position de fermeture où elle permettra à l'écrou de prendre appui contre le couvercle et une position basculée où elle ne gênera pas l'accès à l'intérieur du réacteur même s'il est toujours muni de l'écrou.

Les moyens pour appliquer une pression à l'intérieur du réacteur peuvent comprendre des orifices réalisés dans le couvercle pour permettre de connecter l'intérieur du réacteur à une source de pression. Ces orifices seront par exemple munis de vannes pour faciliter l'application de la pression ou au contraire l'interrompre.

Dans un mode de réalisation privilégié de l'invention, le réacteur comprend en outre un bloc condenseur muni de trous en nombre de préférence au moins égal au nombre d'alvéoles et disposés selon la même géométrie, le bloc condenseur étant fixé sur la face supérieure du socle de telle sorte que les trous et les alvéoles soient au moins en partie alignés les uns avec les autres et de telle sorte que la fixation résiste à la pression appliquée à l'intérieur du réacteur, le couvercle, en position fermée, prenant appui contre la face supérieure du bloc condenseur. Afin d'assurer l'étanchéité du réacteur lorsqu'une surpression est appliquée à l'intérieur, il est préférable d'interposer un joint d'étanchéité entre le socle et le bloc condenseur.

Pour permettre un refroidissement plus efficace, le bloc condenseur peut être muni de conduites pour la circulation d'un fluide caloporteur, par exemple de l'eau, des moyens de raccord à une alimentation pouvant être prévus pour faciliter le raccord du réacteur à une source de fluide caloporteur. Ces conduites peuvent également servir à faire circuler un fluide de chauffage.

Afin d'assurer l'étanchéité du réacteur au niveau du couvercle, il est préférable d'interposer un joint d'étanchéité entre le couvercle et la face supérieure du socle ou du bloc condenseur lorsqu'il y en a un.

Dans un mode de réalisation privilégié de l'invention, on prévoit un panier pour faciliter l'introduction et la sortie des récipients. Ce panier peut être muni de tiges de guidage pouvant pénétrer dans des trous de guidage réalisés dans le socle et/ou dans le bloc condenseur.

Afin de faciliter le positionnement du réacteur sur une source de chaleur telle qu'une plaque chauffante, il est préférable de munir la face inférieure du socle d'un évidement. La plaque de la plaque chauffante pourra pénétrer dans cet évidement de sorte qu'elle sera bien centrée et qu'un chauffage (ou un refroidissement) homogène du socle soit assuré. La surface de l'évidement couvrira de préférence sensiblement l'emplacement des alvéoles.

Les différents éléments pourront être dimensionnés pour résister et assurer l'étanchéité du réacteur lorsqu'une sous-pression sera appliquée à l'intérieur. Le réacteur pourra ainsi travailler aussi bien en surpression qu'en sous-pression, voire sous vide

Un exemple de réalisation est présenté ci-dessous à l'aide des figures qui montrent :

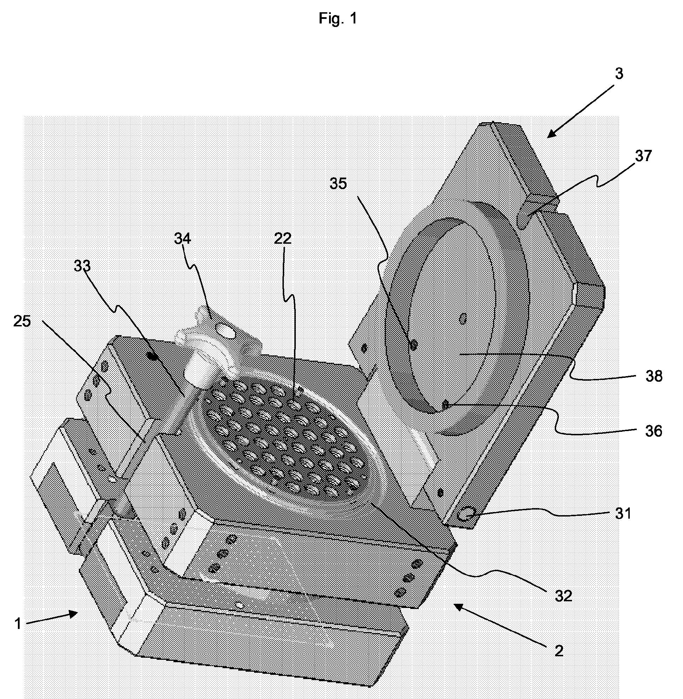

- Figure 1 :: une vue en perspective d'un réacteur conforme à l'invention en position ouverte ;

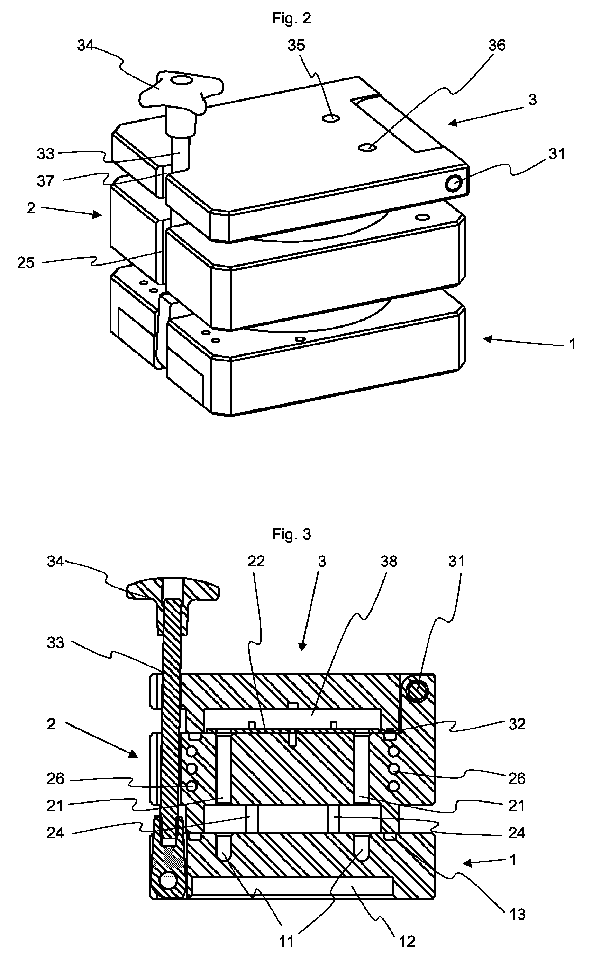

- Figure 2 :: une vue de côté du réacteur de la figure 1 en position fermée ,

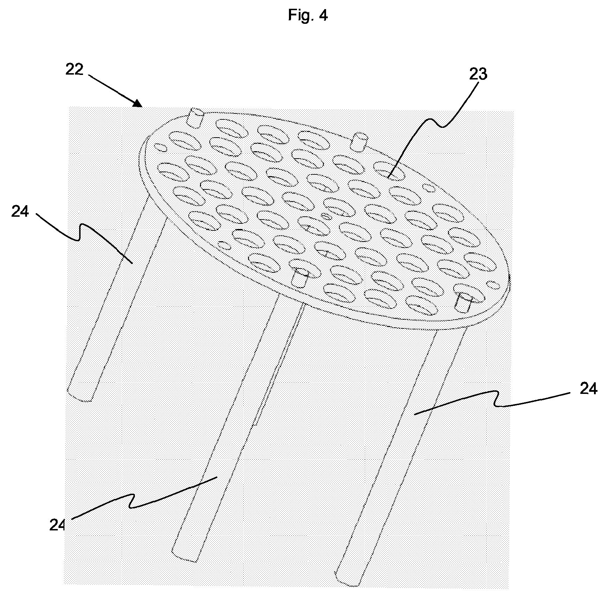

- Figure 3 :: une vue en coupe médiane du réacteur de la figure 2 ;
- Figure 4 :: une vue en perspective d'un panier.

Le réacteur comprend essentiellement trois parties principales : le socle (1), le bloc condenseur (2) et le couvercle (3), le bloc condenseur (2) étant optionnel. Une série d'alvéoles cylindriques (11) sont réalisées dans le socle (1). Ces alvéoles sont destinées à recevoir la base de récipients de réaction tels que des tubes à essai. Dans le cas présent, il y a 48 alvéoles (11) distribuées selon des lignes et des colonnes et disposées à l'intérieur d'un cercle. Le socle (1) peut être chauffé ou refroidi par une source de chaleur ou de froid externe non représentée. Pour cela, il est préférable de le munir sur sa face inférieure d'un évidement central (12) dans lequel pourra pénétrer par exemple la plaque d'une plaque chauffante. Le socle (1) est conçu pour transmettre de façon homogène aux récipients de réaction la chaleur ou le froid qu'il pourra recevoir d'une source externe. Il est tout a fait possible d'intégrer la source de chaleur et/ou de froid au socle pour rendre le réacteur autonome.

Le bloc condenseur (2) est isolé du socle (1) par exemple par un joint (13). Il est percé d'une multitude de trous (21) distribués selon la même géométrie que les alvéoles (11). Le bloc condenseur (2) est fixé par exemple par des vis sur le socle (1) de telle sorte que les alvéoles (11) et les trous (21) soient alignés. Le joint (13) sert également à rendre le réacteur étanche aussi bien en surpression qu'en sous-pression.

Le bloc condenseur (2) est muni de moyens de refroidissement. Ces moyens de refroidissement peuvent être par exemple réalisés sous la forme de conduites (26) permettant la circulation d'un fluide de refroidissement tel que de l'eau. Des raccords rapides sont disposés dans une paroi latérale du bloc condenseur pour permettre un raccordement simple à une arrivée d'eau. Il va de soi que ces conduites (26) peuvent également servir à chauffer le bloc condenseur à la place ou en plus du chauffage par le socle (1).

Afin de faciliter l'entrée et la sortie des tubes à essai, il est préférable d'utiliser un panier (22) présentant autant de trous (23) que d'alvéoles (21) et distribués selon la même géométrie. Le panier (22) pourra être muni de moyens pour faciliter son positionnement par rapport aux alvéoles. Ces moyens pourront être par exemple des tiges de guidage (24) placées dans des trous réalisés à cet effet dans le bloc condenseur (2) et/ou dans le socle (1). Ces trous de guidage auront de préférence des diamètres inférieurs à ceux des trous (21) du bloc condenseur et des alvéoles (11) du socle (1). Ainsi, le panier (22) ne pourra être positionné que dans une ou plusieurs positions précises (ici 2 positions décalées de 90° l'une par rapport à l'autre). Les tiges de guidage (24) seront de préférence légèrement plus longues que les tubes à essai de sorte qu'au moment de la mise en place du panier garni de ses tubes à essai, ce soient les tiges de guidage qui pénètrent en premier dans les trous de guidage. On assure ainsi un meilleur guidage de l'ensemble des tubes à essai.

Un couvercle (3) est prévu pour fermer le réacteur. Pour des raisons de simplicité, il est préférable que le couvercle (3) soit articulé sur un axe (31) autour duquel il peut pivoter pour passer d'une position de fermeture en appui sur la partie supérieure du bloc condenseur (2), ou du socle (1) lorsqu'il n'y a pas de bloc condenseur (2), dans une position ouverte permettant l'entrée et la sortie des tubes à essais placés par exemple dans le panier (22). Afin d'assurer une fermeture étanche du réacteur, il est prévu de placer un joint d'étanchéité (32) sur le bloc condenseur (2), ou le socle (1) lorsqu'il n'y a pas de bloc condenseur (2), et/ou sur le couvercle (3). Pour garantir cette étanchéité même en cas de surpression à l'intérieur du réacteur, on a prévu des moyens de blocage du couvercle en position fermée. Ces moyens sont constitués dans l'exemple présenté ici par une tige filetée (33) fixée de façon pivotante sur le socle (1) et s'étendant en traversant un premier évidement (25) pratiqué dans le bloc condenseur et un deuxième évidement (37) pratiqué dans le couvercle pour saillir au-dessus du couvercle lorsque celui-ci est rabattu en position fermée. Un écrou croisillon (34) permet, lorsqu'il est vissé sur la tige filetée, d'exercer une pression suffisante sur le couvercle pour assurer une fermeture étanche du réacteur. Pour ouvrir le couvercle, il suffit de dévisser, au moins en partie, l'écrou croisillon (34) pour libérer une longueur suffisante de la tige filetée (33) de sorte qu'elle puisse pivoter en sortant au moins du deuxième évidement (37) pratiqué dans le couvercle (3).

Le réacteur est conçu de telle sorte que tous les récipients soient soumis à la même pression. Pour cela, le couvercle (3) est muni d'une cavité (38) qui se trouve au-dessus des récipients lorsque le couvercle est fermé. Il serait également possible que les bords du bloc condenseur (2), ou du socle (1) lorsqu'il n'y a pas de bloc condenseur (2), s'étendent au-dessus du sommet des récipients lorsqu'ils sont mis en place dans le réacteur. D'autres solutions seraient envisageables pour que tous les récipients soient soumis à la même pression.

Afin de permettre la circulation de gaz ou l'application d'une surpression ou d'une sous-pression, voire un vide, deux orifices (35, 36) sont pratiqués dans le couvercle (3). Des vannes de coupure, non représentées, sont fixées sur ces orifices (35, 36) pour permettre un raccordement à une arrivée de gaz ou à une pompe à vide par exemple. On peut ainsi réaliser des réactions sous atmosphère inerte, sous pression ou sous vide. Le joint d'étanchéité (32) et les moyens de blocage (33, 34) garantissent l'étanchéité du réacteur aussi bien en sous-pression qu'en surpression.

On pourra utiliser des tubes à essai classiques ou des tubes à essai jetables. Il n'est pas nécessaire ainsi de nettoyer le réacteur après chaque série d'essais. Les tubes à essai jetables ont l'intérêt de ne pas nécessiter non plus de nettoyage.

Le réacteur multipuits de l'invention permet donc de réaliser des réactions nécessitant un chauffage et/ou un refroidissement. Il est étanche à pression et au vide. Il s'adapte facilement aux appareillages standard de laboratoire tels que des plaques chauffantes, des arrivées d'eau de refroidissement ou des sources de gaz ou des pompes à vide. On peut utiliser des agitateurs magnétiques pour assurer une agitation constante de chaque tube à essai.

### Liste des références :

- 1.: Socle
- 11.: Alvéoles cylindriques
- 12.: Evidement central
- 13.: Joint d'étanchéité
- 2.: Bloc condenseur
- 21.: Trous
- 22.: Panier
- 23.: Trous du panier
- 24.: Tiges de guidage
- 25.: Evidement pour passage de la tige fileté
- 26.: Conduites de circulation d'un fluide caloporteur
- 27.: Raccords rapides
- 3.: Couvercle
- 31.: Axe de pivotement du couvercle
- 32.: Joint d'étanchéité
- 33.: Tige filetée
- 34.: Écrou croisillon
- 35.: Entrée/sortie gaz/vide
- 36.: Entrée/sortie gaz/vide
- 37.: Evidement pour passage de la tige filetée
- 38.: Cavité

## Revendications

1. Réacteur comprenant un socle (1) muni d'au moins deux alvéoles (11) pouvant recevoir chacune un récipient et d'un couvercle (3) pour fermer le réacteur, **caractérisé en ce que** le couvercle (3) est muni de moyens (35, 36) pour appliquer une pression à l'intérieur du réacteur de sorte que tous les récipients soient soumis à une même pression, et de moyens (31, 32, 33, 34) pour fixer le couvercle (3) au socle (1) du réacteur de sorte qu'il ferme de façon étanche le réacteur lorsqu'une pression est appliquée à l'intérieur du réacteur.

2. Réacteur selon la revendication 1, **caractérisé en ce que** les moyens pour fixer le couvercle (3) sur le socle (1) comprennent un pivot (31) autour duquel le couvercle (3) peut pivoter, une tige filetée (33) solidaire du socle (1) et s'étendant sur une longueur suffisante pour saillir au-dessus du couvercle (3) lorsque celui-ci est en position fermée et un écrou (34) pouvant être vissé sur la tige filetée (33) en appuyant sur le couvercle (3) en position fermée.

3. Réacteur selon la revendication précédente, **caractérisé en ce que** la tige filetée (33) est fixée sur un pivot solidaire du socle (1) de sorte à pouvoir pivoter entre une position de fermeture où elle permettra à l'écrou (34) de prendre appui contre le couvercle (3) et une position basculée permettant l'ouverture du couvercle (3).

4. Réacteur selon l'une des revendications précédentes, **caractérisé en ce que** les moyens pour appliquer une pression à l'intérieur du réacteur comprennent des orifices (35, 36) réalisés dans le couvercle pour permettre de connecter l'intérieur du réacteur à une source de pression.

5. Réacteur selon l'une des revendications précédentes, **caractérisé en ce qu'**il comprend en outre un bloc condenseur (2) muni de trous (21) en nombre de préférence au moins égal au nombre d'alvéoles (11) et disposés selon la même géométrie, le bloc condenseur (2) étant fixé sur la face supérieure du socle (1) de telle sorte que les trous (21) et les alvéoles (11) soient au moins en partie alignés les uns avec les autres et de telle sorte que la fixation résiste à la pression appliquée à l'intérieur du réacteur, le couvercle (3), en position fermée, prenant appui contre la face supérieure du bloc condenseur (2).

6. Réacteur selon la revendication précédente, **caractérisé en ce qu'**un joint d'étanchéité (13) est interposé entre le socle (1) et le bloc condenseur (2).

7. Réacteur selon la revendication 5 ou 6, **caractérisé en ce que** le bloc condenseur (2) est muni de conduites (26) pour la circulation d'un fluide caloporteur, par exemple de l'eau, des moyens de raccord à une alimentation pouvant être prévus pour faciliter le raccord du réacteur à une source de fluide caloporteur.

8. Réacteur selon l'une des revendications précédentes, **caractérisé en ce qu'**un joint d'étanchéité (32) est interposé entre le couvercle (3) et la face supérieure du socle (1) ou du bloc condenseur (2) lorsqu'il y en a un.

9. Réacteur selon l'une des revendications précédentes, **caractérisé en ce qu'**un panier (22) est prévu pour faciliter l'introduction et la sortie des récipients.

10. Réacteur selon la revendication précédente, **caractérisé en ce que** le panier (22) est muni de tiges de guidage (24) pouvant pénétrer dans des trous de guidage réalisés dans le socle (1) et/ou dans le bloc condenseur (2).

11. Réacteur selon l'une des revendications précédentes, **caractérisé en ce que** la face inférieure du socle (1) est munie d'un évidement (12).

12. Réacteur selon l'une des revendications précédentes, **caractérisé en ce que** les différents éléments sont dimensionnés pour résister et assurer l'étanchéité du réacteur lorsqu'une sous-pression est appliquée à l'intérieur de celui-ci.
